# EUROPÄISCHE PATENTSCHRIFT

(11) **EP 2 892 905 B1**
(45) Veröffentlichungstag und Bekanntmachung des Hinweises auf die Patenterteilung: **16.01.2019**
(21) Anmeldenummer: 13756132.0
(22) Anmeldetag: 29.08.2013
(51) Int. Cl.: C07F 7/18, C07F 7/08, C08G 18/71, C08G 18/72, C08G 18/73, C08G 18/75, C08G 18/28, C08G 18/38

(54) **ISOCYANATOSILANE MIT THIOURETHANSTRUKTUR**
ISOCYANATOSILANE WITH THIOURETHANE STRUCTURE
ISOCYANATOSILANE AVEC STRUCTURE EN THIOURÉTHANE

(30) Priorität: 04.09.2012 EP 12182885
(43) Veröffentlichungstag der Anmeldung: 15.07.2015
(73) Patentinhaber: Covestro Deutschland AG, 51373 Leverkusen (DE)
(72) Erfinder: LAAS, Hans, Josef, 51519 Odenthal (DE)
(74) Vertreter: Levpat
(86) Internationale Anmeldenummer: PCT/EP2013/067939
(87) Internationale Veröffentlichungsnummer: WO 2014/037279

(56) Entgegenhaltungen:
- EP-A2- 0 202 491
- WO-A1-2009/156148
- JP-A- 60 233 133

## Beschreibung

Die Erfindung betrifft ein Verfahren zur Herstellung Isocyanat- und Silangruppen enthaltender Verbindungen, die nach diesem Verfahren erhältlichen Produkte, sowie eine Zusammensetzung von Isocyanat- und Silangruppen enthaltenden Verbindungen. Des Weiteren betrifft die Erfindung die Verwendung der nach dem erfindungsgemäßen Verfahren erhältlichen Produkte und der Zusammensetzung von Isocyanat- und Silangruppen enthaltenden Verbindungen als Ausgangskomponente bei der Herstellung von Silangruppen enthaltenden Polyurethanen, vernetzbaren Bindemitteln, sowie Lack-, Dichtstoff- oder Klebstoffrohstoffen.

Isocyanatoorganosilane stellen als Verbindungen mit zwei unterschiedlichen reaktiven Funktionalitäten interessante Bausteine für die chemische Synthese dar. Sie können sowohl über die Isocyanatgruppe mit acide Wasserstoffatome tragenden Verbindungen reagieren als auch, beispielsweise in Gegenwart von Feuchtigkeit, unter Polykondensation der Silangruppe vernetzen. Eine besondere Rolle spielen Isocyanatoorganosilane zur Modifizierung hydroxyfunktioneller Polymere für eine Reihe unterschiedlicher Anwendungen.

Isocyanatoalkylalkoxysilane, wie sie z. B. in US 3 494 951 oder EP-A 0 649 850 beschrieben sind, ermöglichen beispielsweise die Herstellung besonders niedrigviskoser Silan-terminierter Prepolymere, die als feuchtigkeitsvernetzende Kleb- und Dichtstoffe zum Einsatz kommen (siehe z. B. EP-A 0 070 475, EP-A 0 372 561).

Alkoxysilangruppen-enthaltende Umsetzungsprodukte von Polyolen, wie z. B. Polyacrylatpolyolen und/oder einfachen mehrwertigen Alkoholen, mit Isocyanatopropyltrimethoxysilan oder Isocyanatopropyltriethoxysilan lassen sich nach der Lehre der WO 2009/115079 in Gegenwart geeigneter Katalysatoren auch unter Wasserausschluß thermisch aushärten. Derartige Bindemittel ermöglichen u. a. die Formulierung von Fahrzeuglacken sehr hoher Kratzbeständigkeit.

Die technischen Verfahren zur Herstellung von Isocyanatoalkylalkoxysilanen sind allerdings sehr aufwändig und teuer. Die Produkte fallen in nur mäßigen Ausbeuten und darüber hinaus mit schwankender Qualität und unzureichender Lagerstabilität an. Es wurden daher auch bereits Versuche unternommen, alternative Verbindungen zu synthetisieren, die gleichzeitig eine Isocyanatgruppe und eine Silanstruktur aufweisen.

Die EP-A 1 136 495 beschreibt ein Verfahren zur Herstellung monomerenarmer 1 : 1-Monoaddukte aus speziellen sekundären Aminoalkylalkoxysilanen und Diisocyanaten, bei dem die Reaktionspartner unter Verwendung eines großen molaren Isocyanatüberschusses miteinander umgesetzt und im Anschluss die nicht umgesetzten monomeren Diisocyanate destillativ abgetrennt werden. Als Aminosilane kommen bei diesem Verfahren die aus der EP-A 0 596 360 bekannten, durch Umsetzung von Maleinsäuredialkylestern und Aminosilanen erhältlichen Asparaginsäureester zum Einsatz, die entsprechend der Lehre der EP-A 1 136 495 im Gegensatz zu anderen einfachen sekundären Aminosilanen mit Isocyanaten lagerstabile Addukte bilden sollen. Wie eigene Versuche zeigen, sind die bei der Umsetzung der Silan-funktionellen Asparaginsäureester mit Isocyanaten gebildeten Harnstoffstrukturen tatsächlich rückspaltstabil, während sich einfache N-Alkylaminosilane gegenüber Isocyanatgruppen wie übliche Blockierungsmittel verhalten und bei erhöhter Temperatur wieder freigesetzt werden.

Während der Dünnschichtdestillation von Reaktionsgemischen auf Basis solcher einfacher N-Alkylaminosilane bilden sich daher, selbst wenn anfänglich ein sehr hoher Diisocyanatüberschuß gewählt wurde, aufgrund thermischer Harnstoffspaltung und anschließender Rekombination bei bereits anteilig abdestilliertem Diisocyanat-Monomer, neben dem gewünschten Isocyanatosilan (1 : 1-Monoaddukt) immer auch sehr hohe Anteile von zweifach silyliertem Bisharnstoff (2 : 1-Bisaddukt) als unerwünschtes Nebenprodukt, das nicht mehr zur weiteren Umsetzung zur Verfügung steht.

Obwohl die in EP-A 1 136 495 beschriebene Umsetzung von Diisocyanaten mit Silan-funktionellen Asparaginsäureestern dagegen Harnstoffgruppen liefert, die unter den Bedingungen einer Dünnschichtdestillation stabil gegen Rückspaltung sind, weist dieses Verfahren einen anderen gravierenden Nachteil auf.

Wie aus der EP-A 0 807 649 bekannt, reagieren Addukte von Isocyanaten an Alkoxysilangruppen enthaltende Asparaginsäureester bereits bei vergleichsweise milden Temperaturen von 50 - 160°C unter Abspaltung des Alkohols aus einer der Estergruppen und Cyclisierung zu Hydantoinderivaten ab. Diese Reaktion findet auch beim Verfahren der EP-A 1 136 495 aufgrund der thermischen Belastung während der Dünnschichtdestillation unweigerlich statt. Der freigesetzte Monoalkohol reagiert entweder mit dem gewünschten Isocyanatosilan unter Urethanisierung und Verlust von NCO-Funktionalität im Zielmolekül oder wird gemeinsam mit überschüssigem monomeren Diisocyanat vom Produkt abdestilliert. Das dann anfallende, durch den Alkohol bzw. das sich bildende Urethan verunreinigte Diisocyanat-Destillat kann nicht ohne weitere Aufreinigung erneut im Syntheseprozess eingesetzt werden und muss gegebenenfalls teuer entsorgt werden.

Als weitere Methode zur Herstellung von Silangruppen enthaltenden Isocyanaten ist die Umsetzung von Polyisocyanaten mit Mercaptosilanen prinzipiell bereits bekannt. Die JP-A 60233133 beschreibt beispielsweise die äquimolare Umsetzung von Hexamethylendiisocyanat (HDI) mit 3-Mercaptopropyltrimethoxysilan. Das Reaktionsprodukt, das neben dem 1 : 1-Addukt aufgrund des statistischen Reaktionsverlaufes erhebliche Anteile an 2 : 1 Bisaddukt, sowie monomerem, nicht umgesetztem Diisocyanat enthält, wird als solches ohne weitere Aufreinigung bzw. Monomerenabtrennung zur Modifizierung eines Polyamids eingesetzt. In der JP-A 61047774 wird die Verwendung dieser Reaktionsprodukte als Aufbaukomponenten für Schmelzkleber beschrieben.

Auch die JP-A 61218631 beschreibt die Verwendung von Umsetzungsprodukten aus Diisocyanaten und Mercaptosilanen für Schmelzkleber. Die durch die äquimolare Umsetzung von Diisocyanaten und Mercaptosilanen erhaltenen Reaktionsgemische dienen hierbei zur Modifizierung von Polyester-Harzen.

Die DE-A 2540080 beschreibt die Verwendung unterschiedlicher Isocyanatosilane, darunter Addukte aus Polyisocyanaten und gegenüber Isocyanatgruppen reaktiven Silanen, wie z. B. auch Mercaptosilanen, in einem Äquivalentverhältnis von Isocyanatgruppen zu gegenüber Isocyanaten reaktiven Gruppen von mindesten 2 : 1 in speziellen Klebstoffmassen. In den konkreten Beispielen der DE-A 2540080 kommen Isocyanatosilane auf Basis von Mercaptosilanen allerdings nicht zum Einsatz.

Aus der US 4,246,369 ist jedoch bekannt, dass aliphatische und aromatische Thiole Blockierungsmittel für Isocyanate darstellen, die bereits bei niedrigen Temperaturen wieder abspalten.

Es bestand daher ein Bedarf an neuen, insbesondere thermisch stabilen Isocyanatosilanen, die in einem einfachen Verfahren hergestellt werden können.

Aufgabe der vorliegenden Erfindung war es daher, ein Verfahren zur Herstellung von thermisch und lagerstabilen Isocyanatosilanen zur Verfügung zu stellen, das auf gut verfügbaren Rohstoffen basiert und zudem wirtschaftlich rentabel ist. Durch das erfindungsgemäße Verfahren sollten die gewünschten Produkte sicher, reproduzierbar und ohne zu große Anteile an unerwünschten Nebenprodukten herstellbar sein.

Diese Aufgabe wird erfindungsgemäß gelöst durch ein Verfahren zur Herstellung Isocyanat- und Silangruppen enthaltender Verbindungen, durch Umsetzung von wenigstens
A) einem monomeren Diisocyanat mit aliphatisch, cycloaliphatisch, araliphatisch und/oder aromatisch gebundenen Isocyanatgruppen mit
B) einem Mercaptosilan,
   dadurch gekennzeichnet, dass die Komponente A) mit Komponente B) in einem Äquivalentverhältnis von Isocyanatgruppen zu Mercaptogruppen von mindestens 6 : 1 bis höchstens 40 : 1 umgesetzt wird.

Das erfindungsgemäße Verfahren beruht auf der überraschenden Beobachtung, dass Thiourethane aus üblichen Mercaptoalkylsilanen und Diisocyanaten anders als die vorstehend beschriebenen N-Alkylaminosilane unter den Bedingungen einer Dünnschichtdestillation völlig stabil verhalten. Keiner der oben genannten Veröffentlichungen konnte der Fachmann irgendeinen Hinweis darauf entnehmen, dass es trotz der bekannten Thermolabilität von Thiourethanen möglich ist, Reaktionsgemische aus Diisocyanaten und Mercaptosilanen destillativ zersetzungsfrei aufzuarbeiten, die US 4,246,369 lehrt sogar Gegenteiliges. Diese überraschende Stabilität der Thiourethanbindung erlaubt es, aus Reaktionsgemischen von Mercaptosilanen und molar überschüssigen Mengen an Diisocyanaten die nicht umgesetzten Monomeren vom gewünschten Isocyanatosilan (1:1-Monoaddukt) einfach abzudestillieren, ohne dass dabei ein erhöhter Anteil an 2 : 1-Bisaddukt entsteht. So können auch Umsetzungen mit Äquivalentverhältnissen von Isocyanat- zu Mercatogruppen von 6 : 1 bis 40 : 1 realisiert werden. In diesem Bereich kann die Bildung von unerwünschtem 2:1-Bisaddukt auf einen wirtschaftlich akzeptablen Anteil gesenkt und dennoch ein ausreichender Umsatz erzielt werden.

In einer bevorzugten Ausführungsform der Erfindung werden als Komponente B) Mercaptosilane der allgemeine Formel (I) oder deren Gemische eingesetzt, 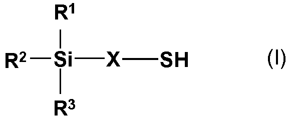 in welcher
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, und
X für einen linearen oder verzweigten organischen Rest mit mindestens 2 Kohlenstoffatomen steht.

Besonders bevorzugte Mercaptosilane B) für das erfindungsgemäße Verfahren sind solche der allgemeinen Formel (I), in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
- X: für einen linearen oder verzweigten Alkylenrest mit 2 bis 10 Kohlenstoffatomen steht.

Ganz besonders bevorzugte Mercaptosilane B) sind solche der allgemeinen Formel (I), in welcher
- R¹, R² und R³: jeweils Alkylreste mit bis zu 6 Kohlenstoffatomen und/oder Alkoxyreste, die bis zu 3 Sauerstoffatomen enthalten, bedeuten, mit der Maßgabe, daß mindestens einer der Reste R¹, R² und R³ für einen solchen Alkoxyrest steht, und
- X: für einen Propylenrest (-CH₂-CH₂-CH₂-) steht.

Des weiteren bevorzugte Mercaptosilane B) sind solche der allgemeinen Formel (I), in welcher
- R¹, R² und R³: für gleiche oder verschiedene Reste stehen und jeweils Methyl, Methoxy oder Ethoxy bedeuten, mit der Maßgabe, dass mindestens einer der Reste R¹, R² und R³ für einen Methoxy- oder Ethoxyrest steht, und
- X: für einen Propylenrest (-CH₂-CH₂-CH₂-) steht.

Geeignete Mercaptosilane B) sind beispielsweise 2-Mercaptoethyltrimethylsilan, 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3-Mercaptopropyltrimethoxysilan, 3-Mercaptopropylmethyldiethoxysilan, 3-Mercaptopropyltriethoxysilan, 3-Mercaptopropylethyldimethoxysilan, 3-Mercaptopropylethyldiethoxysilan und/oder 4-Mercaptobutyltrimethoxysilan.

Als Ausgangsverbindungen A) für das erfindungsgemäße Verfahren sind beliebige Diisocyanate mit aliphatisch, cycloaliphatisch, araliphatisch und/oder aromatisch gebundenen Isocyanatgruppen geeignet, die nach beliebigen Verfahren, z. B. durch Phosgenierung oder auf phosgenfreiem Weg, beispielsweise durch Urethanspaltung, hergestellt werden können.

Bevorzugte Diisocyanate sind beispielsweise solche der allgemeinen Formel (II)

**OCN-Y-NCO** (II),

in welcher Y für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht.

Beispielsweise geeignet sind 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-lsocyanato-3,3,5-trimethyl-5-isocyanatomethylcyclohexan (Isophorondiisocyanat; IPDI), 1-lsocyanato-1-methyl-4(3)-isocyanatomethylcyclohexan, 2,4'- und 4,4'-Diisocyanatodicyclohexylmethan (H₁₂-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol, 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136.

Als Ausgangskomponente A) bevorzugt sind Diisocyanate der allgemeinen Formel (II), in welcher Y für einen linearen oder verzweigten, aliphatischen oder cycloaliphatischen Rest mit 6 bis 13 Kohlenstoffatomen steht.

Besonders bevorzugte Ausgangskomponenten A) für das erfindungsgemäße Verfahren sind 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Zur Durchführung des erfindungsgemäßen Verfahrens werden die Diisocyanate A) mit den Mercaptosilanen B) bei Temperaturen von 20 bis 200 °C, vorzugsweise 40 bis 160 °C umgesetzt. Dabei werden die Komponente A) und B) in einem Äquivalentverhältnis von Isocyanatgruppen (Komponente A) zu Mercaptogruppen (Komponente B) von mindestens 6 : 1 bis höchstens 40 : 1, bevorzugt von 8 : 1 bis höchstens 30 : 1 und besonders bevorzugt von 10 : 1 bis höchstens 25 : 1 eingesetzt.

Die Umsetzung der Ausgangskomponenten A) und B) kann nach dem erfindungsgemäßen Verfahren in Lösung oder lösemittelfrei in Substanz, bevorzugt jedoch lösemittelfrei ausgeführt werden.

Das erfindungsgemäße Verfahren kann ohne den Einsatz von Katalysatoren durchgeführt werden. Gegebenenfalls können zur Beschleunigung der Umsetzung aber auch übliche aus der Polyurethanchemie bekannte Katalysatoren mitverwendet werden. Beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,2-Dimethylimidazol, 2-Methylimidazol, N,N-Dimethylimidazol-β-phenylethylamin, 1,4-Diazabicyclo-(2,2,2)-octan (DABCO) und Bis-(N,N-dimethylaminoethyl)adipat, Amidine, wie z. B. 1,5-Diazabicyclo[4.3.0]nonen (DBN), 1,8-Diazabicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyl-diethanolamin, N-Ethyl-diethanolamin, Dimethylaminoethanol und 2-(N,N-Dimethylaminoethoxy)ethanol, N,N',N"-Tris-(dialkylaminoalkyl)hexahydrotriazine, wie z. B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-Wismut(III)-2-ethylhexanoat, Wis-mut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat.

Bevorzugte einzusetzende Katalysatoren sind tertiäre Amine, Amidine und Zinnverbindungen der genannten Art.

Besonders bevorzugte Katalysatoren sind 1,4-Diazabicyclo-(2,2,2)-octan (DABCO), 1,5-Diazabicyclo[4.3.0]nonen (DBN), 1,8-Diazabicyclo(5.4.0)undecen-7 (DBU) sowie Dibutylzinn(IV)-dilaurat (DBTL).

Die beispielhaft genannten Katalysatoren können bei der Herstellung der erfindungsgemäßen Isocyanatosilane einzeln oder in Form beliebiger Mischungen untereinander eingesetzt werden und kommen dabei, falls überhaupt, in Mengen von 0,001 bis 1,0 Gew.-%, bevorzugt 0,01 bis 0,5 Gew.-%, berechnet als Gesamtmenge an eingesetzten Katalysatoren bezogen auf die Gesamtmenge der verwendeten Ausgangsverbindungen, zum Einsatz.

Der Verlauf der Umsetzung kann beim erfindungsgemäßen Verfahren durch z. B. titrimetrische Bestimmung des NCO-Gehaltes verfolgt werden. Nach Erreichen des angestrebten NCO-Gehaltes, im allgemeinen nach vollständiger Urethanisierung, wird die Reaktion abgebrochen.

In einer bevorzugten Ausführungsform der Erfindung wird nach der Umsetzung der Komponenten A) mit B) ein nicht umgesetzter Überschusses an monomeren Diisocyanaten A) bis auf einen Restgehalt von weniger als 1 Gew.-%, vorzugsweise von weniger als 0,5 Gew.-%, besonders bevorzugt von weniger als 0,3 Gew.-%, bezogen auf die Gesamtmasse des Reaktionsproduktes, vom Reaktionsprodukt abgetrennt.

Das Reaktionsgemisch wird dabei vorzugsweise durch Dünnschichtdestillation im Vakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von überschüssigen monomeren Diisocyanaten befreit.

Die anfallenden Destillate können problemlos zur erneuten Umsetzung mit Mercaptosilanen verwendet werden.

In einer weiteren, jedoch weniger bevorzugten Ausführungsform des erfindungsgemäßen Verfahrens werden die monomeren Diisocyanate durch Extraktion mit geeigneten, gegenüber Isocyanat- und Silangruppen inerten Lösungsmitteln, beispielsweise aliphatischen oder cycloaliphatischen Kohlenwasserstoffen wie Pentan, Hexan, Heptan, Cyclopentan oder Cyclohexan vom gebildeten Thiourethan abgetrennt.

Unabhängig von der Art der Aufarbeitung erhält man als Produkte des erfindungsgemäßen Verfahrens klare, praktisch farblose Isocyanat- und Silangruppen enthaltende Verbindungen, die in Abhängigkeit vom gewählten Ausgangsdiisocyanat niedrig- bis hochviskose Flüssigkeiten darstellen und NCO-Gehalte von 6,0 bis 13,5 Gew.-%, vorzugsweise 7,0 bis 12,0 Gew.-%, besonders bevorzugt 8,0 bis 11,5 Gew.-%, sowie Restgehalte an monomeren Ausgangsdiisocyanaten von weniger als 1,0 Gew.-%, vorzugsweise von weniger als 0,5 Gew.-%, besonders bevorzugt von weniger als 0,3 Gew.-%, bezogen auf die Gesamtmasse des Reaktionsproduktes, aufweisen.

Ebenfalls Gegenstand der Erfindung ist eine Zusammensetzung enthaltend
a) Isocyanat- und Silangruppen enthaltende Verbindungen der allgemeinen Formel (III), 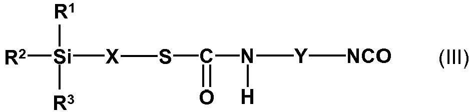
b) Silangruppen enthaltende Verbindungen der allgemeinen Formel (IV) 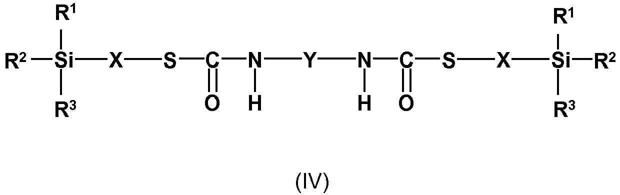 und
c) monomere Diisocyanate mit aliphatisch, cycloaliphatisch, araliphatisch und/oder aromatisch gebundenen Isocyanatgruppen
   wobei
   - R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
   - X: für einen linearen oder verzweigten organischen Rest mit mindestens 2 Kohlenstoffatomen steht und
   - Y: für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht,
   dadurch gekennzeichnet, dass die Komponente a) einen Anteil von ≥ 85 Gew.-%, bevorzugt ≥ 90 Gew.-%, die Komponente b) einen Anteil von ≤ 15 Gew.-%, bevorzugt ≤ 10 Gew.-% der Gesamtmasse der Komponenten a) und b), und die Komponente c) ≤ 1 Gew.-% der Gesamtzusammensetzung ausmacht.

In einer bevorzugten Ausführungsform der Erfindung macht die Komponente b) einen Anteil von 2 bis 15 Gew.-%, bevorzugt 2 bis 10 Gew.-% der Gesamtmasse der Komponenten a) und b) aus.

Bevorzugt stehen in den Formeln (III) und (IV)
- R¹, R² und R³: für gleiche oder verschiedene Reste, die jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
- X: für einen linearen oder verzweigten Alkylenrest mit 2 bis 10 Kohlenstoffatomen.

Besonders bevorzugt stehen in den Formeln (III) und (IV)
- R¹, R² und R³: für gleiche oder verschiedene Reste, die jeweils Alkylreste mit bis zu 6 Kohlenstoffatomen und/oder Alkoxyreste bedeuten, die bis zu 3 Sauerstoffatomen enthalten, mit der Maßgabe, dass mindestens einer der Reste R¹, R² und R³ für einen solchen Alkoxyrest steht, und
- X: für einen Propylenrest (-CH₂-CH₂-CH₂-).

Ganz besonders bevorzugt stehen in den Formeln (III) und (IV)
- R¹, R² und R³: für gleiche oder verschiedene Reste, die jeweils Methyl, Methoxy oder Ethoxy bedeuten, mit der Maßgabe, dass mindestens einer der Reste R¹, R² und R³ für einen Methoxy- oder Ethoxyrest steht, und
- X: für einen Propylenrest (-CH₂-CH₂-CH₂-).

Bevorzugt steht in den Formeln (III) und (IV)
- Y: für einen linearen oder verzweigten, aliphatischen oder cycloaliphatischen Rest mit 6 bis 13 Kohlenstoffatomen.

Für die monomeren Diisocyanate c) gelten ebenfalls die für die Ausgangskomponente A) oben angegebenen bevorzugten Ausführungsformen.

Gegenstand der Erfindung ist insbesondere auch die Verwendung der erfindungsgemäßen Isocyanat- und Silangruppen enthaltenden Verbindungen oder der erfindungsgemäßen Zusammensetzung als Ausgangskomponenten bei der Herstellung von Silangruppen enthaltenden Polyurethanen, vernetzbaren Bindemitteln, sowie vernetzbaren Lack-, Dichtstoff- oder Klebstoffrohstoffen. Die Silangruppen enthaltenden Polyurethanen oder vernetzbaren Bindemittel werden dabei bevorzugt zur Herstellung von Lack-, Dichtstoff- oder Klebstoffrohstoffen verwendet.

Ein weiterer Gegenstand der Erfindung sind Silangruppen enthaltende Polyurethane, hergestellt unter Verwendung der erfindungsgemäßen Isocyanat- und Silangruppen enthaltenden Verbindungen oder der erfindungsgemäßen Zusammensetzung.

Diese können durch Umsetzung der erfindungsgemäßen Isocyanat- und Silangruppen enthaltenden Verbindungen oder der erfindungsgemäße Zusammensetzung mit beliebigen vorzugsweise mindestens difunktionellen Polyolen, wie z. B. einfachen mehrwertigen Alkoholen, Ether- oder Esteralkoholen, oder üblichen aus der Polyurethanchemie bekannten polymeren Polyetherpolyolen, Polyesterpolyolen, Polycarbonatpolyolen und/oder Polyacrylatpolyolen, hergestellt werden.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

Die Rest-Monomeren Gehalte wurden nach DIN EN ISO 10283 gaschromatographisch mit internem Standard gemessen.

Die Anteile an Bisaddukt (aus zwei Molekülen Mercaptosilan und einem Molekül Diisocyanat) wurden durch Gelpermationschromatographie in Anlehnung an DIN 55672-1 (Gelpermeationschromatographie (GPC) - Teil 1: Tetrahydrofuran (THF) als Elutionsmittel) bei Raumtemperatur ermittelt, mit der Änderung, dass mit einer Flußrate von 0,6 ml/min statt 1,0 ml/min gearbeitet wurde. Die den Chromatogrammen entnommenen Anteile an Bisaddukt in Flächen-%, welche softwaregestützt ermittelt wurden, wurden näherungsweise jeweils Anteilen in Gew.-% gleichgesetzt und als solche, bezogen auf die Gesamtmenge an Mono- und Bisaddukt, angegeben.

Sämtliche Viskositätsmessungen erfolgten mit einem Physica MCR 51 Rheometer der Fa. Anton Paar Germany GmbH (DE) nach DIN EN ISO 3219.

### Beispiel 1 (erfindungsgemäß)

1680 g (10 mol) Hexamethylendiisocyanat (HDI) wurden bei einer Temperatur von 80°C unter trockenem Stickstoff mit 196 g (1,0 mol) Mercaptopropyltrimethoxysilan versetzt und nach Zugabe von 0,05 g (25 ppm) 1,4-Diazabicyclo[2.2.2]octan (DABCO) 1 Stunde gerührt, bis ein NCO-Gehalt von 42,5 %, entsprechend einem vollständigen Umsatz, erreicht war. Anschließend wurde das nicht umgesetzte monomere HDI bei einer Temperatur von 140°C und einem Druck von 0,1 mbar im Dünnschichtverdampfer abgetrennt. Man erhielt ein praktisch farbloses, klares Isocyanatosilan mit folgenden Kenndaten:

| | |
|---|---|
| NCO-Gehalt: | 11,2 % |
| monomeres HDI: | 0,19 % |
| Viskosität (23°C): | 80 mPas |
| Anteil Bisaddukt: | 4,1 % |

### Beispiel 2 (erfindungsgemäß)

Nach dem in Beispiel 1 beschriebenen Verfahren wurden 1008 g (6 mol) HDI mit 196 g (1,0 mol) Mercaptopropyltrimethoxysilan in Gegenwart von 0,03 g (25 ppm) DABCO umgesetzt. Nach Erreichen eines NCO-Gehalts von 38,4 %, entsprechend einem vollständigen Umsatz, wurde das nicht umgesetzte monomere HDI wie in Beispiel 1 beschrieben durch Dünnschichtdestillation entfernt und man erhielt ein praktisch farbloses, klaren Isocyanatosilan mit folgenden Kenndaten:

| | |
|---|---|
| NCO-Gehalt: | 10,8 % |
| monomeres HDI: | 0,18 % |
| Viskosität (23°C): | 133 mPas |
| Anteil Bisaddukt: | 7,0 % |

### Beispiel 3 (erfindungsgemäß)

Nach dem in Beispiel 1 beschriebenen Verfahren wurden 1680 g (10 mol) HDI mit 180 g (1,0 mol) Mercaptopropylmethyldimethoxysilan in Gegenwart von 0,05 g (25 ppm) DABCO umgesetzt. Nach Erreichen eines NCO-Gehalts von 42,9 %, entsprechend einem vollständigen Umsatz, wurde das nicht umgesetzte monomere HDI wie in Beispiel 1 beschrieben durch Dünnschichtdestillation entfernt und man erhielt ein praktisch farbloses, klaren Isocyanatosilan mit folgenden Kenndaten:

| | |
|---|---|
| NCO-Gehalt: | 11,6 % |
| monomeres HDI: | 0,15 % |
| Viskosität (23°C): | 77 mPas |
| Anteil Bisaddukt: | 4,0 % |

### Beispiel 4 (erfindungsgemäß)

1680 g (10 mol) Hexamethylendiisocyanat (HDI) wurden bei einer Temperatur von 80°C unter trockenem Stickstoff mit 238 g (1,0 mol) Mercaptopropyltriethoxysilan versetzt und nach Zugabe von 0,05 g (25 ppm) Dibutylzinndilaurat (DBTL) 3 Stunden gerührt, bis ein NCO-Gehalt von 41,6 %, entsprechend einem vollständigen Umsatz, erreicht war. Anschließend wurde das nicht umgesetzte monomere HDI wie in Beispiel 1 beschrieben durch Dünnschichtdestillation entfernt und man erhielt ein praktisch farbloses, klaren Isocyanatosilan mit folgenden Kenndaten:

| | |
|---|---|
| NCO-Gehalt: | 9,9 % |
| monomeres HDI: | 0,15 % |
| Viskosität (23°C): | 92 mPas |
| Anteil Bisaddukt: | 4,3 % |

### Beispiel 5 (erfindungsgemäß)

Nach dem in Beispiel 4 beschriebenen Verfahren wurden 2220 g (10 mol) Isophorondiisocyanat (IPDI) mit 196 g (1,0 mol) Mercaptopropyltrimethoxysilan in Gegenwart von 0,06 g (25 ppm) DBTL umgesetzt. Nach Erreichen eines NCO-Gehalts von 33,0 %, entsprechend einem vollständigen Umsatz, wurde das nicht umgesetzte monomere IPDI bei einer Temperatur von 150°C und einem Druck von 0,1 mbar im Dünnschichtverdampfer abgetrennt. Man erhielt ein praktisch farbloses, klares Isocyanatosilan mit folgenden Kenndaten:

| | |
|---|---|
| NCO-Gehalt: | 9,7 % |
| monomeres IPDI: | 0,23 % |
| Viskosität (23°C): | 5400 mPas |
| Anteil Bisaddukt: | 4,8 % |

### Beispiel 6 (erfindungsgemäß)

Nach dem in Beispiel 4 beschriebenen Verfahren wurden 2620 g (10 mol) 4,4'-Diisocyanatodicyclohexylmethan (H₁₂-MDI) mit 196 g (1,0 mol) Mercaptopropyltrimethoxysilan in Gegenwart von 0,07 g (25 ppm) DBTL umgesetzt. Nach Erreichen eines NCO-Gehalts von 28,3 %, entsprechend einem vollständigen Umsatz, wurde das nicht umgesetzte monomere H₁₂-MDI bei einer Temperatur von 150°C und einem Druck von 0,1 mbar im Dünnschichtverdampfer abgetrennt. Man erhielt ein praktisch farbloses, klares Isocyanatosilan mit folgenden Kenndaten:

| | |
|---|---|
| NCO-Gehalt: | 8,6 % |
| monomeres H₁₂-MDI: | 0,20 % |
| Viskosität (23°C): | 15200 mPas |
| Anteil Bisaddukt: | 6,0 % |

### Beispiel 7 (erfindungsgemäß)

Nach dem in Beispiel 1 beschriebenen Verfahren wurden 504 g (3 mol) HDI mit 196 g (1,0 mol) Mercaptopropyltrimethoxysilan in Gegenwart von 0,02 g (25 ppm) DABCO umgesetzt. Nach Erreichen eines NCO-Gehalts von 30,0 %, entsprechend einem vollständigen Umsatz, wurde das nicht umgesetzte monomere HDI wie in Beispiel 1 beschrieben durch Dünnschichtdestillation entfernt und man erhielt ein praktisch farbloses, klaren Isocyanatosilan mit folgenden Kenndaten:

| | |
|---|---|
| NCO-Gehalt: | 10,0 % |
| monomeres HDI: | 0,21 % |
| Viskosität (23°C): | 143 mPas |
| Anteil Bisaddukt: | 13,5 % |

### Beispiel 8 (Vergleich)

Nach dem in Beispiel 1 beschriebenen Verfahren wurden 336 g (2 mol) HDI mit 196 g (1,0 mol) Mercaptopropyltrimethoxysilan in Gegenwart von 0,01 g (25 ppm) DABCO umgesetzt. Nach Erreichen eines NCO-Gehalts von 23,7 %, entsprechend einem vollständigen Umsatz, wurde das nicht umgesetzte monomere HDI wie in Beispiel 1 beschrieben durch Dünnschichtdestillation entfernt und man erhielt ein praktisch farbloses, klaren Isocyanatosilan mit folgenden Kenndaten:

| | |
|---|---|
| NCO-Gehalt: | 9,1 % |
| monomeres HDI: | 0,12 % |
| Viskosität (23°C): | 165 mPas |
| Anteil Bisaddukt: | 21,0 % |

Das Beispiel zeigt, dass Isocyanatosilane aus Diisocyanaten und Mercaptosilanen, die unter Verwendung eines geringeren als dem erfindungsgemäßen Mindestüberschuss an Isocyanatgruppen hergestellt wurden, sehr hohe Anteile des 2:1-Bisadduktes enthalten, weshalb sie als Bausteine zur Herstellung Silangruppen enthaltender Polyurethane ungeeignet sind.

### Beispiel 9 (Vergleich)

168 g (1,0 mol) Hexamethylendiisocyanat (HDI) wurden bei einer Temperatur von 80°C unter trockenem Stickstoff mit 196 g (1,0 mol) Mercaptopropyltrimethoxysilan versetzt und nach Zugabe von 0,05 g (25 ppm) Dibutylzinndilaurat (DBTL) 3 Stunden gerührt, bis ein NCO-Gehalt von 11,5 %, entsprechend einem vollständigen Umsatz, erreicht war. Man erhielt ein praktisch farbloses, klares silan-modifiziertes Isocyanatgemisch mit folgenden Kenndaten:

| | |
|---|---|
| NCO-Gehalt: | 11,5 % |
| monomeres HDI: | 5,69 % |
| Viskosität (23°C): | 80 mPas |
| Anteil Bisaddukt: | 38,9 % |

Das Beispiel zeigt, dass die äquimolare Umsetzung eines Diisocyanates mit einem Mercaptosilan ohne anschließende Dünnschichtdestillation ein Produktgemisch ergibt, in dem neben dem gewünschten 1:1-Monoaddukt hohe Anteile des 2:1-Bisadduktes und sehr hohe Gehalte an monomerem HDI vorliegen.

### Beispiel 10 (Vergleich)

1680 g (10 mol) Hexamethylendiisocyanat (HDI) wurden bei Raumtemperatur unter trockenem Stickstoff innerhalb einer Stunde mit 235 g (1,0 mol) N-Butylaminopropyltrimethoxysilan versetzt und eine weitere Stunde gerührt, bis ein NCO-Gehalt von 41,7 %, entsprechend einem vollständigen Umsatz, erreicht war. Anschließend wurde das nicht umgesetzte monomere HDI bei einer Temperatur von 140°C und einem Druck von 0,1 mbar im Dünnschichtverdampfer abgetrennt. Man erhielt ein schwach gelb gefärbtes, klares Isocyanatosilan mit folgenden Kenndaten:

| | |
|---|---|
| NCO-Gehalt: | 5,6 % |
| monomeres HDI: | 1,9 % |
| Viskosität (23°C): | 1000 mPas |
| Anteil Bisaddukt: | 47,1 % |

Das Beispiel zeigt, dass sich Umsetzungsprodukte von Isocyanaten mit sekundären Aminosilanen wie blockierte Polyisocyanate verhalten und bei höheren Temperaturen wieder in die Edukte zurückspalten. Trotz eines anfänglich hohen molaren Überschusses an HDI führt die thermische Harnstoffspaltung und anschließende Rekombination im Dünnschichtverdampfer zu einem Produktgemisch, das hohe Anteile an monomerem HDI und HDI/Mercaptosilan-Bisaddukt enthält.

### Beispiel 11 (Vergleich)

1680 g (10 mol) Hexamethylendiisocyanat (HDI) wurden bei Raumtemperatur unter trockenem Stickstoff innerhalb einer Stunde mit 351 g (1,0 mol) eines gemäß Beispiel 5 der EP-A 0 596 360 hergestellten Adduktes von Aminopropyltrimethoxysilan an Maleinsäurediethylester versetzt und eine weitere Stunde gerührt, bis ein NCO-Gehalt von 39,3 %, entsprechend einem vollständigen Umsatz, erreicht war. Anschließend wurde das nicht umgesetzte monomere HDI bei einer Temperatur von 140°C und einem Druck von 0,1 mbar im Dünnschichtverdampfer abgetrennt. Man erhielt ein gelbbraun gefärbtes Produkt mit folgenden Kenndaten:

| | |
|---|---|
| NCO-Gehalt: | 8,3 % |
| monomeres HDI: | 0,12 % |
| Viskosität (23°C): | 470 mPas |

Das Beispiel zeigt, dass das gebildete, Harnstoffgruppen enthaltende Isocyanatosilan unter den Bedingungen der Dünnschichtdestillation nicht stabil ist. Laut Analyse (GPC, ¹³C-NMR) haben ca. 30 % der ursprünglich im Additionsprodukt vorhandenen Harnstoffgruppen nach dem in EP-A 0 807 649 beschriebenen Mechanismus unter Abspaltung von Ethanol zu Hydantoinstrukturen abreagiert. Das als Destillat des Dünnschichtprozesses anfallende HDI ist durch HDI-Ethylurethane verunreingt.

## Patentansprüche

1. Verfahren zur Herstellung Isocyanat- und Silangruppen enthaltender Verbindungen, durch Umsetzung von wenigstens
A) einem monomeren Diisocyanat mit aliphatisch, cycloaliphatisch, araliphatisch und/oder aromatisch gebundenen Isocyanatgruppen
mit
B) einem Mercaptosilan,
**dadurch gekennzeichnet, dass** die Komponente A) mit Komponente B) in einem Äquivalentverhältnis von Isocyanatgruppen zu Mercaptogruppen von mindestens 6 : 1 bis höchstens 40 : 1 umgesetzt wird.

2. Verfahren gemäß Anspruch 1, **dadurch gekennzeichnet, dass** als Komponente B) Mercaptosilane der allgemeine Formel (I) oder deren Gemische eingesetzt werden, 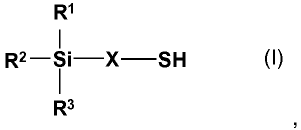 in welcher
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, und
X für einen linearen oder verzweigten organischen Rest mit mindestens 2 Kohlenstoffatomen steht.

3. Verfahren gemäß Anspruch 2, **dadurch gekennzeichnet, dass** als Komponente B) Mercaptosilane der allgemeine Formel (I) oder deren Gemische eingesetzt werden, wobei
R¹, R² und R³ für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
X für einen linearen oder verzweigten Alkylenrest mit 2 bis 10 Kohlenstoffatomen steht.

4. Verfahren gemäß Anspruch 3, **dadurch gekennzeichnet, dass** als Komponente B) Mercaptosilane der allgemeinen Formel (I) oder deren Gemische eingesetzt werden, wobei
R¹, R² und R³ für gleiche oder verschiedene Reste stehen und jeweils Alkylreste mit bis zu 6 Kohlenstoffatomen und/oder Alkoxyreste, die bis zu 3 Sauerstoffatomen enthalten, bedeuten, mit der Maßgabe, daß mindestens einer der Reste R¹, R² und R³ für einen solchen Alkoxyrest steht, und
X für einen Propylenrest (-CH₂-CH₂-CH₂-) steht.

5. Verfahren gemäß einem der Ansprüche 1 bis 4, **dadurch gekennzeichnet, dass** als Komponente A) monomere Diisocyanate der allgemeinen Formel (II) oder deren Gemische eingesetzt werden,
**OCN-Y-NCO** (II)
wobei
Y für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht.

6. Verfahren gemäß Anspruch 5, **dadurch gekennzeichnet, dass** als Komponente A) 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder deren Gemische eingesetzt werden.

7. Verfahren gemäß einem der Ansprüche 1 bis 6, **dadurch gekennzeichnet, dass** die Komponente A) mit Komponente B) in einem Äquivalentverhältnis von Isocyanatgruppen zu Mercaptogruppen von mindestens 8 : 1 bis höchstens 30 : 1, bevorzugt 10 : 1 bis höchstens 25 : 1 umgesetzt wird.

8. Verfahren gemäß einem der Ansprüche 1 bis 7, **dadurch gekennzeichnet, dass** nach der Umsetzung der Komponenten A) mit B) ein nicht umgesetzter Überschusses an monomeren Diisocyanaten A) bis auf einen Restgehalt von weniger als 1 Gew.-%, bezogen auf die Gesamtmasse des Reaktionsproduktes, vom Reaktionsprodukt abgetrennt wird.

9. Verfahren gemäß Anspruch 8, **dadurch gekennzeichnet, dass** die Abtrennung der monomeren Diisocyanate durch Dünnschichtdestillation erfolgt.

10. Isocyanat- und Silangruppen enthaltende Verbindungen erhältlich nach einem Verfahren gemäß einem der Ansprüche 1 bis 9.

11. Zusammensetzung, enthaltend
a) Isocyanat- und Silangruppen enthaltende Verbindungen der allgemeinen Formel (III), 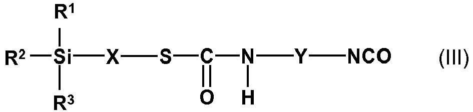
b) Silangruppen enthaltende Verbindungen der allgemeinen Formel (IV) 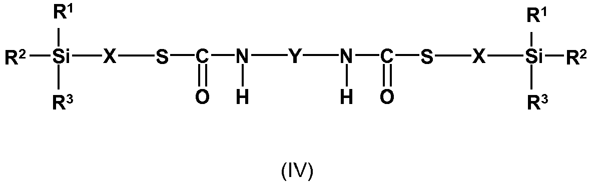 und
c) monomere Diisocyanate mit aliphatisch, cycloaliphatisch, araliphatisch und/oder aromatisch gebundenen Isocyanatgruppen
wobei
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, und
X für einen linearen oder verzweigten organischen Rest mit mindestens 2 Kohlenstoffatomen steht,
Y für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht,
**dadurch gekennzeichnet, dass** die Komponente a) einen Anteil von ≥ 85 Gew.-%, bevorzugt ≥ 90 Gew.-%, die Komponente b) einen Anteil von ≤ 15 Gew.-%, bevorzugt ≤ 10 Gew.-% der Gesamtmasse der Komponenten a) und b), und die Komponente c) ≤ 1 Gew.-% der Gesamtzusammensetzung ausmacht.

12. Zusammensetzung gemäß Anspruch 11, **dadurch gekennzeichnet, dass** die Komponente b) einen Anteil von 2 bis 15 Gew.-%, bevorzugt 2 bis 10 Gew.-% der Gesamtmasse der Komponenten a) und b) ausmacht.

13. Verwendung der Isocyanat- und Silangruppen enthaltenden Verbindungen gemäß Anspruch 10 oder der Zusammensetzung gemäß einem der Ansprüche 11 oder 12 als Ausgangskomponente bei der Herstellung von Silangruppen enthaltenden Polyurethanen.

14. Verwendung der Isocyanat- und Silangruppen enthaltenden Verbindungen gemäß Anspruch 10 oder der Zusammensetzung gemäß einem der Ansprüche 11 oder 12 als Ausgangskomponente bei der Herstellung von vernetzbaren Lack-, Dichtstoff- oder Klebstoffrohstoffen oder von vernetzbaren Bindemitteln.

15. Silangruppen enthaltende Polyurethane, erhältlich aus den Isocyanat- und Silangruppen enthaltenden Verbindungen gemäß Anspruch 10 oder Zusammensetzungen gemäß einem der Ansprüche 11 oder 12.

## Claims

1. Process for preparing compounds containing isocyanate groups and silane groups, by reacting at least
A) a monomeric diisocyanate having aliphatically, cycloaliphatically, araliphatically and/or aromatically bonded isocyanate groups
with
B) a mercaptosilane,
**characterized in that** component A) is reacted with component B) in a ratio of equivalents of isocyanate groups to mercapto groups of at least 6:1 to at most 40:1.

2. Process according to Claim 1, **characterized in that** mercaptosilanes of the general formula (I) or mixtures thereof are used as component B) 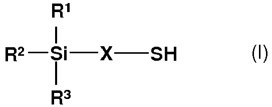 in which
R¹, R² and R³ are identical or different radicals and each is a saturated or unsaturated, linear or branched, aliphatic or cycloaliphatic radical or an optionally substituted aromatic or araliphatic radical having up to 18 carbon atoms, which may optionally contain up to 3 heteroatoms from the group of oxygen, sulfur, nitrogen, and
X is a linear or branched organic radical having at least 2 carbon atoms.

3. Process according to Claim 2, **characterized in that** mercaptosilanes of the general formula (I) or mixtures thereof are used as component B), where
R¹, R² and R³ are identical or different radicals and each is a saturated, linear or branched, aliphatic or cycloaliphatic radical having up to 6 carbon atoms, which may optionally contain up to 3 oxygen atoms and
X is a linear or branched alkylene radical having 2 to 10 carbon atoms.

4. Process according to Claim 3, **characterized in that** mercaptosilanes of the general formula (I) or mixtures thereof are used as component B), where
R¹, R² and R³ are identical or different radicals and each is an alkyl radical having up to 6 carbon atoms and/or alkoxy radicals containing up to 3 oxygen atoms, with the proviso that at least one of the R¹, R² and R³ radicals is such an alkoxy radical, and
X is a propylene radical (-CH₂-CH₂-CH₂-).

5. Process according to any of Claims 1 to 4, **characterized in that** monomeric diisocyanates of the general formula (II) or mixtures thereof are used as component A)
**OCN-Y-NCO** (II)
where
Y is a linear or branched, aliphatic or cycloaliphatic radical having 4 to 18 carbon atoms or an optionally substituted aromatic or araliphatic radical having 6 to 18 carbon atoms.

6. Process according to Claim 5, **characterized in that** 1,6-diisocyanatohexane, 1-isocyanato-3,3,5-trimethyl-5-isocyanatomethylcyclohexane, 2,4'- and/or 4,4'-diisocyanatodicyclohexylmethane or mixtures thereof are used as component A).

7. Process according to any of Claims 1 to 6, **characterized in that** component A) is reacted with component B) in a ratio of equivalents of isocyanate groups to mercapto groups of at least 8:1 to at most 30:1, preferably 10:1 to at most 25:1.

8. Process according to any of Claims 1 to 7, **characterized in that**, after the reaction of components A) with B), any unconverted excess of monomeric diisocyanates A) is removed from the reaction product down to a residual content of less than 1% by weight, based on the total mass of the reaction product.

9. Process according to Claim 8, **characterized in that** the monomeric diisocyanates are removed by thin-film distillation.

10. Compounds containing isocyanate groups and silane groups, obtainable by a process according to any of Claims 1 to 9.

11. Composition comprising
a) compounds of the general formula (III) containing isocyanate groups and silane groups, 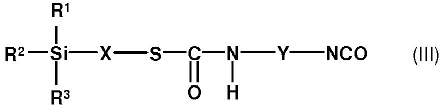
b) compounds of the general formula (IV) containing silane groups 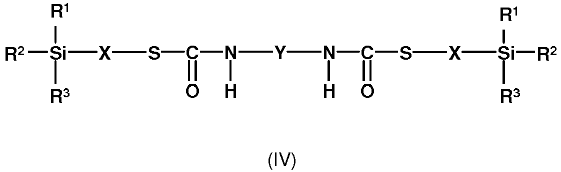 and
c) monomeric diisocyanates having aliphatically, cycloaliphatically, araliphatically and/or aromatically bonded isocyanate groups,
where
R¹, R² and R³ are identical or different radicals and each is a saturated or unsaturated, linear or branched, aliphatic or cycloaliphatic radical or an optionally substituted aromatic or araliphatic radical having up to 18 carbon atoms, which may optionally contain up to 3 heteroatoms from the group of oxygen, sulfur, nitrogen, and
X is a linear or branched organic radical having at least 2 carbon atoms,
Y is a linear or branched, aliphatic or cycloaliphatic radical having 4 to 18 carbon atoms or an optionally substituted aromatic or araliphatic radical having 6 to 18 carbon atoms,
**characterized in that** component a) makes up a proportion of ≥ 85% by weight, preferably ≥ 90% by weight, component b) a proportion of ≤ 15% by weight, preferably ≤ 10% by weight, of the total mass of components a) and b), and component c) makes up ≤ 1% by weight of the overall composition.

12. Composition according to Claim 11, **characterized in that** component b) makes up a proportion of 2% to 15% by weight, preferably 2% to 10% by weight, of the total mass of components a) and b).

13. Use of the compounds containing isocyanate groups and silane groups according to Claim 10 or of the composition according to either of Claims 11 and 12 as a starting component in the preparation of polyurethanes containing silane groups.

14. Use of the compounds containing isocyanate groups and silane groups according to Claim 10 or of the composition according to either of Claims 11 and 12 as a starting component in the production of crosslinkable raw materials for varnishes, sealants or adhesives or of crosslinkable binders.

15. Polyurethanes containing silane groups, obtainable from the compounds containing isocyanate groups and silane groups according to Claim 10 or compositions according to either of Claims 11 and 12.

## Revendications

1. Procédé de fabrication de composés contenant des groupes isocyanate et silane, par mise en réaction d'au moins
A) un diisocyanate monomère contenant des groupes isocyanate reliés aliphatiquement, cycloaliphatiquement, araliphatiquement et/ou aromatiquement,
avec
B) un mercaptosilane,
**caractérisé en ce que** le composant A) est mis en réaction avec le composant B) en un rapport équivalent entre les groupes isocyanate et les groupes mercapto d'au moins 6:1 à au plus 40:1.

2. Procédé selon la revendication 1, **caractérisé en ce que** des mercaptosilanes de formule générale (I) ou leurs mélanges sont utilisés en tant que composant B) 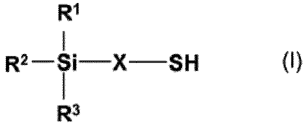 dans laquelle
R¹, R² et R³ représentent des radicaux identiques ou différents, et signifient chacun un radical saturé ou insaturé, linéaire ou ramifié, aliphatique ou cycloaliphatique ou un radical aromatique ou araliphatique éventuellement substitué contenant jusqu'à 18 atomes de carbone, qui peut éventuellement contenir jusqu'à 3 hétéroatomes de la série constituée par l'oxygène, le soufre, l'azote, et
X représente un radical organique linéaire ou ramifié contenant au moins 2 atomes de carbone.

3. Procédé selon la revendication 2, **caractérisé en ce que** des mercaptosilanes de formule générale (I) ou leurs mélanges sont utilisés en tant que composant B),
R¹, R² et R³ représentant des radicaux identiques ou différents, et signifiant chacun un radical saturé, linéaire ou ramifié, aliphatique ou cycloaliphatique, contenant jusqu'à 6 atomes de carbone, qui peut éventuellement contenir jusqu'à 3 atomes d'oxygène, et
X représentant un radical alkylène linéaire ou ramifié de 2 à 10 atomes de carbone.

4. Procédé selon la revendication 3, **caractérisé en ce que** des mercaptosilanes de formule générale (I) ou leurs mélanges sont utilisés en tant que composant B),
R¹, R² et R³ représentant des radicaux identiques ou différents, et signifiant chacun des radicaux alkyle contenant jusqu'à 6 atomes de carbone et/ou des radicaux alcoxy qui contiennent jusqu'à 3 atomes d'oxygène, à condition qu'au moins un des radicaux R¹, R² et R³ représente un tel radical alcoxy, et
X représente un radical propylène (-CH₂-CH₂-CH₂-).

5. Procédé selon l'une quelconque des revendications 1 à 4, **caractérisé en ce que** des diisocyanates monomères de formule générale (II) ou leurs mélanges sont utilisés en tant que composant A)
**OCN-Y-NCO** (II)
dans laquelle
Y représente un radical linéaire ou ramifié, aliphatique ou cycloaliphatique, contenant 4 à 18 atomes de carbone, ou un radical aromatique ou araliphatique éventuellement substitué, contenant 6 à 18 atomes de carbone.

6. Procédé selon la revendication 5, **caractérisé en ce que** le 1,6-diisocyanatohexane, le 1-isocyanato-3,3,5-triméthyl-5-isocyanatométhylcyclohexane, le 2,4'- et/ou 4,4'-diisocyanatodicyclohexylméthane ou leurs mélanges sont utilisés en tant que composant A).

7. Procédé selon l'une quelconque des revendications 1 à 6, **caractérisé en ce que** le composant A) est mis en réaction avec le composant B) en un rapport équivalent entre les groupes isocyanate et les groupes mercapto d'au moins 8:1 à au plus 30:1, de préférence de 10:1 à au plus 25:1.

8. Procédé selon l'une quelconque des revendications 1 à 7, **caractérisé en ce qu'**après la mise en réaction du composant A) avec le composant B), un excès non réagi de diisocyanates monomères A) est séparé du produit de réaction jusqu'à une teneur résiduelle inférieure à 1 % en poids, par rapport à la masse totale du produit de réaction.

9. Procédé selon la revendication 8, **caractérisé en ce que** la séparation des diisocyanates monomères a lieu par distillation sur couche mince.

10. Composés contenant des groupes isocyanate et silane, pouvant être obtenus par un procédé selon l'une quelconque des revendications 1 à 9.

11. Composition contenant :
a) des composés contenant des groupes isocyanate et silane de formule générale (III) 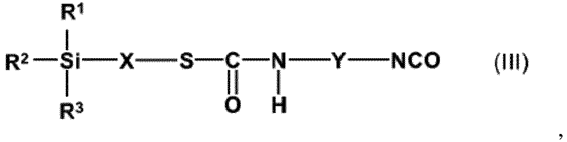
b) des composés contenant des groupes silane de formule générale (IV) 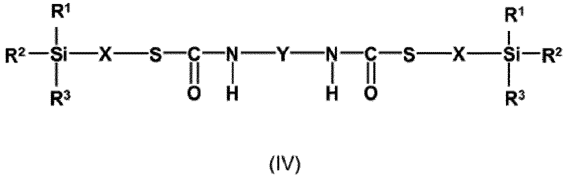 et
c) des diisocyanates monomères contenant des groupes isocyanate reliés aliphatiquement, cycloaliphatiquement, araliphatiquement et/ou aromatiquement,
R¹, R² et R³ représentant des radicaux identiques ou différents, et signifiant chacun un radical saturé ou insaturé, linéaire ou ramifié, aliphatique ou cycloaliphatique ou un radical aromatique ou araliphatique éventuellement substitué contenant jusqu'à 18 atomes de carbone, qui peut éventuellement contenir jusqu'à 3 hétéroatomes de la série constituée par l'oxygène, le soufre, l'azote, et
X représentant un radical organique linéaire ou ramifié contenant au moins 2 atomes de carbone,
Y représentant un radical linéaire ou ramifié, aliphatique ou cycloaliphatique, contenant 4 à 18 atomes de carbone, ou un radical aromatique ou araliphatique éventuellement substitué, contenant 6 à 18 atomes de carbone,
**caractérisée en ce que** le composant a) représente une proportion ≥ 85 % en poids, de préférence ≥ 90 % en poids, le composant b) représente une proportion ≤ 15 % en poids, de préférence ≤ 10 % en poids, de la masse totale des composants a) et b), et le composant c) représente ≤ 1 % en poids de la composition totale.

12. Composition selon la revendication 11, **caractérisée en ce que** le composant b) représente une proportion de 2 à 15 % en poids, de préférence de 2 à 10 % en poids, de la masse totale des composants a) et b).

13. Utilisation des composés contenant des groupes isocyanate et silane selon la revendication 10 ou de la composition selon l'une quelconque des revendications 11 ou 12 en tant que composant de départ lors de la fabrication de polyuréthanes contenant des groupes silane.

14. Utilisation des composés contenant des groupes isocyanate et silane selon la revendication 10 ou de la composition selon l'une quelconque des revendications 11 ou 12 en tant que composant de départ lors de la fabrication de matières premières pour vernis, agents d'étanchéité ou adhésifs, ou de liants réticulables.

15. Polyuréthanes contenant des groupes silane, pouvant être obtenus à partir des composés contenant des groupes isocyanate et silane selon la revendication 10 ou des compositions selon l'une quelconque des revendications 11 ou 12.
